Europäisches Patentamt

European Patent Office

Office européen des brevets

(19)

(11) EP 0 575 900 B1

(12) EUROPÄISCHE PATENTSCHRIFT

(45) Veröffentlichungstag und Bekanntmachung des Hinweises auf die Patenterteilung:
29.01.1997 Patentblatt 1997/05

(51) Int Cl.6: **C08J 3/12**, B01J 2/30

(21) Anmeldenummer: 93109747.1

(22) Anmeldetag: 18.06.1993

(54) **Die Verwendung von mikronisiertem Polyethylenwachs als Trennmittel für klebrige Granulate**

The use of micronized polyethylene wax as parting agent for tacky granulates

Utilisation de la cire de polyéthylène micronisé comme agent de séparation pour granulés collants

(84) Benannte Vertragsstaaten:
BE DE ES FR GB IT NL

(30) Priorität: 23.06.1992 DE 4220525
13.05.1993 DE 4316025

(43) Veröffentlichungstag der Anmeldung:
29.12.1993 Patentblatt 1993/52

(73) Patentinhaber: BASF Aktiengesellschaft
67063 Ludwigshafen (DE)

(72) Erfinder:
• Isbarn, Gunther, Dr.
D-6700 Ludwigshafen (DE)
• Fauth, Karl-Heinz, Dr.
D-6719 Wattenheim (DE)
• Kolk, Erich, Dr.
D-6702 Bad Duerkheim (DE)
• Gropper, Hans, Dr.
D-6703 Limburgerhof (DE)

(56) Entgegenhaltungen:
EP-A- 0 222 061         EP-A- 0 401 914
US-A- 3 528 841

• PATENT ABSTRACTS OF JAPAN vol. 013, no.
129 (P-849)30. März 1989 & JP-A-63 300 245

**Beschreibung**

Die vorliegende Erfindung betrifft die Verwendung von mikronisiertem Polyethylenwachs einer mittleren Teilchengröße von 1 bis 30 μm und eines zahlenmittleren Molekulargewichts $\overline{M}n$ von 500 bis 10 000 als Trennmittel zum Entkleben der Oberfläche klebriger Granulate.

Die Verwendung von Polyethylenwachs in einer Menge von 2,8 Gew.-%, bezogen auf das Granulat, als Trennmittel ist aus der GB-A-928 120 bekannt. Abgesehen davon, daß es offen bleibt, ob das verwendete Polyethylenwachs mikronisiert ist oder nicht, erweist sich die vergleichsweise hohe Menge an Wachs bei der weiteren Verarbeitung der betreffenden gepuderten Granulate als nachteilig.

In der US-A-3 528 841 wird das Entkleben von Granulaten mit mikronisiertem hochmolekularem Polyethylen einer mittleren Teilchengröße von < 10 μm beschrieben. Zwar entfaltet dieses mikronisierte Polyethylen seine Trennwirkung bereits in Mengen von 0,025 bis 0,1 Gew.-%, bezogen auf das jeweilige Granulat, indes ist die Herstellung des mikronisierten hochmolekularen Polyethylens, insbesondere was den Energiebedarf betrifft, ausgesprochen aufwendig (vgl. auch die US-A-3 422 049). Außerdem haben mikronisierte hochmolekulare Polyethylene im allgemeinen Schmelzpunkte oberhalb 115°C (vgl. die US-A-3 422 049), was sich bei der Verarbeitung der gepuderten Granulate häufig störend bemerkbar macht.

Aufgabe der vorliegenden Erfindung ist es, ein Trennmittel für klebrige Granulate vorzuschlagen, welches die Oberfläche bereits in geringen Mengen entklebt, sich bei der weiteren Verarbeitung der Granulate nicht störend bemerkbar macht und welches sich in einfacher Weise ohne großen Aufwand herstellen läßt.

Diese Aufgabe konnte mit Hilfe von mikronisiertem Polyethylenwachs gelöst werden. Diese Lösung und die damit verbundenen Vorteile waren im Hinblick auf den Stand der Technik nicht zu erwarten gewesen, denn dieser ließ nicht erkennen, daß mikronisiertes Polyethylenwachs mikronisiertes hochmolekulares Polyethylen in dieser Anwendung ohne nachteilige Folgen ersetzen konnte.

Demgemäß wurde die Verwendung von mikronisiertem Polyethylenwachs einer mittleren Teilchengröße von 1 bis 30 μm und eines zahlenmittleren Molekulargewichts $\overline{M}n$ von 500 bis 10 000 als Trennmittel zum Entkleben der Oberfläche klebriger Granulate gefunden.

Im Rahmen der vorliegenden Erfindung weist das Eigenschaftswort "mikronisiert" darauf hin, daß die betreffende Substanz bis zur Pulverform, d.h. bis zu Partikelgrößen im Mikrometerbereich, zerkleinert worden ist. Dieser Vorgang wird allgemein auch als "Mikronisieren" oder, synonym, als "Atomisieren" bezeichnet. Demnach wird dieses Eigenschaftswort hier in seiner üblichen und bekannten Bedeutung verwendet.

Für die vorliegende Erfindung ist die Verwendung von mikronisiertem Polyethylenwachs einer mittleren Teilchengröße von 1 bis 30μm wesentlich. Für den erfindungsgemäßen Verwendungszweck sind alle Polyethylenwachse geeignet, welche bei 20°C knetbar und fest bis brüchig hart sind. Vorteilhafterweise sind diese Polyethylenwachse grob- bis feinkristallin sowie durchscheinend opak, indes nicht glasartig. Besonders vorteilhafte Polyethylenwachse dieser Art schmelzen ohne Zersetzung oberhalb 40°C; indes soll der Schmelzpunkt nicht oberhalb von 115°C liegen. Ganz besonders vorteilhafte Polyethylenwachse sind bereits wenige Grade oberhalb ihrer Schmelztemperatur verhältnismäßig niedrig viskos und stark temperaturabhängig in Konsistenz und Löslichkeit. Besonders hervorragende Ergebnisse liefern Polyethylenwachse.

Polyethylenwachse dieser Art sind üblich und bekannt und im Handel erhältlich. Bekanntermaßen können sie durch die Hochdruckpolymerisation von Ethylen in der Gegenwart vergleichsweise hoher Mengen an Molmassenreglern hergestellt werden. Hierbei kann Ethylen mit Comonomeren wie α,β-olefinisch ungesättigten Carbonsäuren wie Acrylsäure, Methacrylsäure, Maleinsäure oder Itaconsäure copolymerisiert werden. Es ist aber auch möglich, die Polyethylenwachse nach ihrer Herstellung in Lösung, in Dispersion oder in ihrer Schmelze mit Sauerstoff zu oxidieren.

Die Polyethylenwachse können aber auch mit Hilfe der Niederdruckpolymerisation von Ethylen mit Ziegler-Katalysatoren hergestellt werden.

Im allgemeinen haben die Polyethylenwachse ein zahlenmittleres Molekulargewicht $\overline{M}_n$ von 500 bis 10.000, insbesondere 1.000 bis 5.000.

Erfindungsgemäß werden diese Polyethylenwachse mikronisiert, d.h. mit einer Teilchengröße zwischen 1 bis 30 μm, verwendet. Im allgemeinen empfiehlt es sich nicht, kleinere Teilchengrößen anzuwenden, weil das betreffende mikronisierte Polyethylenwachs zum Agglomerieren neigt. Andererseits ist es nicht empfehlenswert, Teilchengrößen oberhalb 30 μm anzuwenden, weil die betreffenden Polyethylenwachse als Trennmittel in größeren Mengen angewandt werden müssen, um überhaupt denselben Trenneffekt wie die erfindungsgemäß anzuwendenden mikronisierten Polyethylenwachse zu erzielen. Demnach handelt es sich bei dem Bereich für die mittlere Teilchengröße von 1 bis 30 μm um einen optimalen Bereich, innerhalb dessen die mittlere Teilchengröße frei variiert und dem jeweiligen Granulat und dem jeweiligen Verfahren des Auftragens optimal angepaßt werden kann. Innerhalb dieses optimalen Bereichs ist derjenige von 1 bis 25 μm hervorzuheben, weil mikronisiertes Polyethylenwachs mit dieser mittleren Teilchengröße bereits in geringen Menge eine hervorragende Trennwirkung zeigt.

An und für sich können die erfindungsgemäß zu verwendenden mikronisierten Polyethylenwachse in beliebiger Weise hergestellt werden. Erfindungsgemäß ist es indes von Vorteil, ein mikronisiertes Polyethylenwachs zu verwenden, welches durch Versprühen der betreffenden Polyethylenwachsschmelze mit Gasen, wie beispielsweise Luft oder Stickstoff, in einer Zweistoffdüse hergestellt worden ist. Polyethylenwachse dieser Art sind üblich und bekannt und können unter der Typenbezeichnung Polyethylenwachse AF, AF 30, AF 31 und AF 32 von der Fa. BASF AG bezogen werden.

Erfindungsgemäß können die vorstehend beschriebenen mikronisierten Polyethylenwachse in einer Menge von 0,01 bis 2 Gew.-%, bezogen auf das Granulat, als Trennmittel angewandt werden. Im allgemeinen empfiehlt es sich nicht, geringere Mengen als 0,01 Gew.-% anzuwenden, weil ansonsten die Trennwirkung nicht in allen Fällen völlig befriedigt. Dagegen ist die Verwendung von mehr als 2 Gew.-% unnötig, weil sich die optimale Trennwirkung bereits mit geringeren Mengen verwirklichen läßt.

Erfindungsgemäß eignen sich die vorstehend beschriebenen mikronisierten Polyethylenwachse als Trennmittel zum Entkleben der Oberfläche beliebiger klebriger Granulate. Im Rahmen der vorliegenden Erfindung wird unter "Granulat" ein gekörntes festes Material verstanden, dessen einzelne Körnchen von beliebiger, vorzugsweise aber runder oder zylinderförmiger, Form sind. Im allgemeinen haben die Körnchen einen Durchmesser im Bereich von 1 bis 100 mm, vorzugsweise 5 bis 50 mm.

Besonders bevorzugt werden die mikronisierten Polyethylenwachse zum Entkleben der Oberfläche von Polymergranulat an-gewandt, wobei hinsichtlich der Polymeren der Anwendung keine Grenzen gesetzt sind. Besondere Vorteile ergeben sich indes, wenn die mikronisierten Polyethylenwachse als Trennmittel für Elastomere verwendet werden. Beispiele für Elastomere, welche besonders gut auf die Trennwirkung der mikronisierten Polyethylenwachse ansprechen, sind Ethylen-Propylen-Copolymerisate wie EP- und EPDM-Kautschuke, Polyisobutylen, Isobutylen-Isopren-Copolymerisate (Butylkautschuk), Naturkautschuk, Polyisopren, Polybutadien, halogenierter Butylkautschuk, Polychloropren, Polysulfide, Polyepoxide wie Polypropylenoxid und Copolymere, Polyepichlorhydrin, chlorierte Polyethylene, Silikonkautschuke, Styrol-Butadien-Copolymerisate, Butadien-Acrylnitril-Copolymerisate, Urethanelastomere, halogenierte Ethylen-Propylen-Copolymerisate und Polyethacrylate sowie Blends aus und mit diesen Elastomeren.

Ganz besonders hervorragend läßt sich die Oberfläche von Polyisobutylen-Granulat mit Hilfe der erfindungsgemäß zu verwendenden mikronisierten Polyethylenwachse entkleben. Die mikronisierten Polyethylenwachse sind weitaus leichter zugänglich als die mikronisierten hochmolekularen Polyethylene der US-A-3 528 841. Darüber hinaus weisen die mikronisierten Polyethylenwachse in ihrer Verwendung als Trennmittel weitere besondere Vorteile auf. So entfalten sie bereits in geringen Mengen ihre Wirkung, so daß sie auch nicht die weitere Verarbeitung der Granulate, insbesondere der Granulate aus Elastomeren, stören. Hinzu kommt noch, daß sie im Gegensatz zu den mikronisierten hochmolekularen Ethylenen mit einer Reihe von Polymeren, insbesondere mit Polyisobutylen, verträglich sind, so daß sie bei der Herstellung von Formteilen keine Inhomogenitäten zur Folge haben, sondern sich in den betreffenden Polymeren - ohne eine Trübung hervorzurufen - homogen verteilen.

Methodisch gesehen weist das Auftragen der erfindungsgemäß zu verwendenden mikronisierten Polyethylenwachse auf die Granulate keine Besonderheiten auf, sondern kann in üblicher und bekannter Weise bei oder nach der Herstellung der Granulate erfolgen. Beispiele von Verfahren, welche für das Auftragen von Trennmitteln geeignet sind, sind aus der GB-A-928 120, der US-A-3 528 841, der GB-A-2 220 209 oder EP-A-0 095 898 bekannt.

Wegen der geringen wirksamen Mengen, in denen die mikronisierten Polyethylenwachse erfindungsgemäß angewandt werden können, lassen sich diese bekannten Verfahren besonders leicht und ohne großen Sicherheitsaufwand durchführen.

Beispiele und Vergleichsversuche

Beispiel 1 und Vergleichsversuch A

Die Verwendung von mikronisiertem Polyethylenwachs als Trennmittel für Polyisobutylen-Granulat

Versuchsvorschrift:

Polyisobutylen eines zahlenmittleren Molekulargewichts (Mn) von $3,0 \times 10^6$ wurde nach seiner Herstellung auf einem Extruder entgast und über eine Lochplatte (Durchmesser der Löcher 5 mm) ausgetragen. Die resultierenden heißen Polymerstränge wurden mit Abschlagmessern granuliert. Die heißen Granulate wurden mit Luftkühlern gekühlt und einem Doppelpaddelmischer zugeführt. Die beiden Paddeln des Mischers wiesen einen Durchmesser von 95 mm, einen Kerndurchmesser von 48,3 mm, eine Paddelsteigung von 90 mm und jeweils drei Paddelreihen auf und waren aus V2A-Stahl gefertigt. In diesem Mischer wurde das Granulat desagglomeriert und zugleich mit 0,5 Gew.-%, bezogen auf das Granulat, an mikronisiertem Polyethylenwachs (verwendet wurde das Polyethylenwachs AF 32 der Fa. BASF AG) bepudert.

Üblicherweise werden Polyisobutylen-Granulate und Granulate aus Polyisobutylen-Polypropylen-Blends in 20 kg-Säcken abgesackt. Diese 20 kg-Säcke werden üblicherweise in Teleskopkartons à 800 kg verpackt. In diesen Teleskopkartons liegt die Flächenpressung der untersten Sackschicht bei 5200 kPa, in der mittleren liegt sie bei 2600 kPa. Zu Versuchszwecken wurden diese Bedingungen in zylindrischen Preßtöpfen des Durchmessers 84 mm und der Höhe 60 mm nachgestellt. Diese Preßtöpfe wurden bis zu einer Füllhöhe von 45 mm mit dem gepuderten Granulat aufgefüllt. Die Belastung des Granulats erfolgte mit geeigneten Stahlgewichten.

Die bei der Pressung in den Preßtöpfen entstandenen Tabletten (Durchmesser 84 mm, Höhe 45 mm) wurden nach 1, 2 und 4 Wochen Standzeit auf ihre Zerkleinerbarkeit hin untersucht, wobei diese wie folgt festgestellt und benotet wurde:

- die Tablette konnte ganz einfach durch Zerdrücken per Hand wieder zerkleinert werden, Note 1
- die Tablette konnte noch in einem Pflugscharmischer (verwendet wurde der Lödige-Mischer M5 der Fa. Lödige) zerkleinert werden, Note 2
- die Tablette konnte nur noch in einem Intensivmischer (verwendet wurde der Eirich-Mischer $RO_2$ der Fa. Eirich) zerkleinert werden, Note 3
- die Tablette konnte nur noch durch Zerschneiden zerkleinert werden, Note 4.

Die Versuchsergebnisse finden sich in der Tabelle. Die Benotungen belegen die vorzügliche Trennwirkung des mikronisierten Polyethylenwachses.

Im Gegensatz dazu ließ sich ungepudertes Polyisobutylen bereits nach einer Woche nicht mehr desagglomerieren sondern nur noch durch Zerschneiden zerkleinern (Note 4, Vergleichsversuch A).

Beispiele 2 und 3 und Vergleichsversuche B und C

Die Verwendung von mikronisiertem Polyethylenwachs als Trennmittel für Granulat aus Polyisobutylen-Polypropylen-Blends

Versuchsvorschrift:

Beispiel 1 und Vergleichsversuch A wurden zweimal wiederholt, nur daß anstelle von reinem Polyisobutylen ein Blend aus 75 Gew.-% Polyisobutylen und 25 Gew.-% Polypropylen des Handelsnamens NOVOLEN® 2500 HX der Fa. BASF AG (Beispiel 2 und Vergleichsversuch B) und ein Blend aus 75 Gew.-% Polyisobutylen und 25 Gew.-% Polypropylen des Handelsnamens NO-VOLEN® 2800 IX der Fa. BASF AG (Beispiel 3 und Vergleichsversuch C) verwendet wurden. Bei den Vergleichsversuchen B und C wurde das Verhalten der ungepuderten Granulate untersucht.

Die hierbei erhaltenen Versuchsergebnisse finden sich gleichfalls in der Tabelle. Der Vergleich zwischen den Ergebnissen der Beispiele 2 und 3 einerseits und der Vergleichsversuche B und C andererseits untermauert erneut die vorzügliche Trennwirkung des mikronisierten Polyethylenwachses.

Bei der Weiterverarbeitung der Blends der Beispiele 2 und 3 machte sich das Trennmittel in keinster Weise störend bemerkbar.

Tabelle: Die Zerkleinerbarkeit von Polyisobutylen und seinen Blends mit Polypropylen, welche mit jeweils 0,5 Gew.-% mikronisiertem Polyethylenwachs ausgerüstet waren (Beispiele 1 bis 3), im Vergleich mit den ungepuderten Blends (Vergleichsversuche B und C)

| Beispiel Nr. | Belastung (kPa) | Benotung nach einer Standzeit von | | |
|---|---|---|---|---|
| | | 1 Woche | 2 Wochen | 4 Wochen |
| 1 | 2,6 | 1 | 1 | 2 |
| | 5,2 | 2 | 3 | 3 |
| 2 | 2,6 | 1 | 1 | 1 |
| | 5,2 | 1 | 1 | 2 |
| 3 | 2,6 | 1 | 1 | 1 |
| | 5,2 | 1 | 2 | 2 |
| Vergl.-Versuch B | 2,6 | 2 | 2-3 | 3 |
| | 5,2 | 3 | 4 | 4 |
| Vergl.-Versuch C | 2,6 | 2 | 2-3 | 3 |
| | 5,2 | 3 | 4 | 4 |

EP 0 575 900 B1

**Patentansprüche**

1. Verwendung von mikronisiertem Polyethylenwachs einer mittleren Teilchengröße von 1 bis 30 μm und eines zahlenmittleren Molekulargewichts $\overline{M}$n von 500 bis 10 000 als Trennmittel zum Entkleben der Oberfläche klebriger Granulate.

2. Die Verwendung nach Anspruch 1, dadurch gekennzeichnet, daß man das mikronisierte Polyethylenwachs in einer Menge von 0,01 bis 2 Gew.-%, bezogen auf das Granulat, anwendet.

3. Die Verwendung nach Anspruch 1 oder 2, dadurch gekennzeichnet, daß man ein mikronisiertes Polyethylenwachs verwendet, welches durch Versprühen der betreffenden Polyethylenwachsschmelze mit Gasen in einer Zweistoffdüse hergestellt worden ist.

4. Verfahren zum Entkleben der Oberfläche klebriger Granulate durch Auftragen von mikrofeinem Polyethylen in wirksamen Mengen, dadurch gekennzeichnet, daß man als mikrofeines Polyethylen mikronisiertes Polyethylenwachs einer mittleren Teilchengröße von 1 bis 30 μm und eines zahlenmittleren Molekulargewichts $\overline{M}$n von 500 bis 10 000 verwendet.

5. Das Verfahren nach Anspruch 4, dadurch gekennzeichnet, daß man das mikronisierte Polyethylenwachs in einer Menge von 0,01 bis 2 Gew.-%, bezogen auf das Granulat, verwendet.

6. Das Verfahren nach Anspruch 4 oder 5, dadurch gekennzeichnet, daß das mikronisierte Polyethylenwachs durch Versprühen der betreffenden Polyethylenwachsschmelze mit Gasen in einer Zweistoffdüse hergestellt worden ist.

**Claims**

1. Use of a micronized polyethylene wax having a mean particle size of from 1 to 30 μm and a number average molecular weight $\overline{M}$n of from 500 to 10,000 as a lubricant for detackifying the surface of tacky granules.

2. Use as claimed in claim 1, wherein the micronized polyethylene wax is employed in an amount of from 0.01 to 2% by weight, based on the granules.

3. Use as claimed in claim 1 or 2, wherein a micronized polyethylene wax which has been prepared by atomizing the relevant polyethylene wax melt with a gas in a two-material nozzle is employed.

4. A process for detackifying the surface of tacky granules by applying microfine polyethylene in an effective amount, wherein the microfine polyethylene used is micronized polyethylene wax having a mean particle size of from 1 to 30 μm and a number average molecular weight $\overline{M}$n of from 500 to 10,000.

5. A process as claimed in claim 4, wherein the micronized polyethylene wax is used in an amount of from 0.01 to 2% by weight, based on the granules.

6. A process as claimed in claim 4 or 5, wherein the micronized polyethylene wax has been prepared by atomizing the relevant polyethylene wax melt with a gas in a two-material nozzle.

**Revendications**

1. Utilisation de cire de polyéthylène micronisée ayant une taille moyenne de particules de 1 à 30 μm et une masse moléculaire moyenne en nombre $\overline{M}$n de 500 à 10 000 en tant qu'agent de séparation pour rendre non collante la surface de granulés collants.

2. Utilisation selon la revendication 1, caractérisée par le fait qu'on emploie la cire de polyéthylène micronisée en une quantité de 0,01 à 2 % en poids, par rapport au granulé.

3. Utilisation selon l'une des revendications 1 et 2, caractérisée par le fait qu'on emploie une cire de polyéthylène micronisée qui a été préparée par atomisation de la masse fondue de cire de polyéthylène concernée avec des gaz dans une buse double.

4. Procédé pour rendre non collante la surface de granulés collants par dépôt de polyéthylène microfin en quantité efficace, caractérisé par le fait qu'on emploie comme polyéthylène microfin de la cire de polyéthylène micronisée ayant une taille moyenne de particules de 1 à 30 μm et une masse moléculaire moyenne en nombre $\overline{M}$n de 500 à 10 000.

5. Procédé selon la revendication 4, caractérisé par le fait qu'on emploie la cire de polyéthylène micronisée en une quantité de 0,01 à 2 % en poids, par rapport au granulé.

6. Procédé selon l'une des revendications 4 et 5, caractérisé par le fait que la cire de polyéthylène micronisée a été préparée par atomisation de la masse fondue de cire de polyéthylène concernée avec des gaz dans une buse double.